# DEMANDE DE BREVET EUROPEEN

(11) **EP 3 486 524 A1**
(43) Date de publication de la demande: **22.05.2019**
(21) Numéro de dépôt: 18206840.3
(22) Date de dépôt: 16.11.2018
(51) Int. Cl.: F16H 7/02, F02B 67/06, F16H 7/18

(54) **ENSEMBLE POUR MOTEUR A COMBUSTION INTERNE, NOTAMMENT DE VEHICULE AUTOMOBILE, COMPRENANT AU MOINS UN ARBRE A CAMES, UN VILEBREQUIN ET UN ORGANE DE TRANSMISSION**

(30) Priorité: 16.11.2017 FR 1760772
(71) Demandeur: RENAULT s.a.s., 92100 Boulogne-Billancourt (FR)
(72) Inventeur: MILLON, Jean-Pierre, 78870 Bailly (FR); GRATIAN, Jean-Louis, 95120 ERMONT (FR)

(57) **Abrégé**

L'invention concerne un ensemble (10) pour moteur à combustion interne, notamment de véhicule automobile, comprenant un vilebrequin (11), une roue dentée (12) de vilebrequin montée solidaire en rotation sur le vilebrequin, au moins un arbre à cames (13, 14), une roue dentée (15, 16) d'arbre à cames montée solidaire en rotation sur l'arbre à cames et un organe de transmission (17) comprenant lui-même :
- une première roue dentée intermédiaire (21) engrenée sur la roue dentée de vilebrequin,
- une deuxième roue dentée intermédiaire (23) montée solidaire en rotation avec la première roue dentée intermédiaire (21),
- un organe de transmission flexible fermé (24) engrené d'une part sur la deuxième roue dentée intermédiaire et d'autre part sur la roue dentée d'arbre à cames.

## Description

### DOMAINE TECHNIQUE

L'invention concerne un ensemble pour moteur à combustion interne, notamment de véhicule automobile, comprenant au moins un arbre à cames, un vilebrequin et un organe de transmission. L'invention concerne encore un moteur à combustion interne pour véhicule automobile comprenant un tel ensemble.

### ETAT DE L'ART

Un moteur à combustion interne de véhicule automobile comprend de manière classique une culasse, un vilebrequin monté rotatif sur la culasse autour d'un axe de vilebrequin, au moins un arbre à cames monté rotatif sur la culasse autour d'un axe d'arbre à cames, parallèle à l'axe de vilebrequin, et un organe de transmission monté entre le vilebrequin et l'arbre à cames.

Le vilebrequin est entraîné en rotation autour de l'axe de vilebrequin par des pistons coulissant de manière alternative le long de cylindres logés dans la culasse du moteur à combustion interne. Il transmet en outre son mouvement de rotation, par l'intermédiaire de l'organe de transmission, à l'arbre à cames qui commande ainsi l'ouverture et la fermeture de soupapes d'admission et d'échappement du moteur à combustion interne. Ces soupapes commandent elle-même l'admission et l'échappement des gaz dans chacune des chambres de combustion du moteur à combustion interne, qui sont formées par les cylindres, entre les soupapes et les pistons.

L'organe de transmission coopère de manière connue avec chacun du vilebrequin et de l'arbre à cames par l'intermédiaire d'une roue dentée avec laquelle ils sont montés solidaires en rotation.

Plusieurs solutions d'organe de transmission ont été mises en oeuvre pour assurer la transmission du mouvement de rotation du vilebrequin à l'arbre à cames.

La transmission a par exemple été réalisée au moyen d'engrenages montés sur la culasse.

Or, cette solution peut être délicate et complexe à mettre en oeuvre, notamment lorsque la distance entre le vilebrequin et l'arbre à cames est importante, parce que le rapport du nombre de tours entre le vilebrequin et l'arbre à cames est imposé par l'architecture du moteur à combustion interne, mais aussi à cause de la dispersion des jeux de montage des engrenages sur la culasse au vu des tolérances d'usinage de la culasse. Elle n'est donc préconisée que lorsque la distance entre le vilebrequin et l'arbre à cames est faible, ce qui la rend peu adaptable.

La transmission a aussi été réalisée au moyen d'une chaîne ou d'une courroie crantée.

Cette solution pose cependant problème lorsqu'un couple élevé doit être transmis par le vilebrequin via la chaîne ou la courroie. C'est par exemple le cas lorsque l'arbre à cames entraîne lui-même en rotation des accessoires du moteur à combustion interne, tels qu'une pompe à injection haute pression ou une pompe à huile ou encore une pompe à eau, au moyen d'engrenages situés à une extrémité de l'arbre à cames, opposée à celle entraînée en rotation par la chaîne ou la courroie crantée.

En effet, la transmission d'un couple élevé impose de dimensionner la chaîne ou la courroie dentée en conséquence, de sorte à s'assurer qu'elle résiste mécaniquement à la transmission de ce couple.

Or, il en résulte une augmentation du pas de la chaîne ou de la courroie crantée, entraînant une augmentation du nombre de dents et du diamètre des roues dentées de vilebrequin et d'arbre à cames, ce qui a de manière générale des répercussions négatives sur leur encombrement, notamment en termes de hauteur et de largeur pour les roues dentées, mais aussi sur leur masse.

Plus particulièrement, lorsque le moteur à combustion interne comprend deux arbres à cames, cette augmentation du nombre de dents et du diamètre des roues dentées de vilebrequin et d'arbre à cames limite la proximité avec laquelle les deux arbres à cames peuvent être agencés l'un par rapport à l'autre.

Ce problème a par exemple été résolu en entraînant en rotation un premier des deux arbres à cames par chaîne ou courroie crantée et en entraînant en rotation le deuxième des deux arbres à cames par engrenages via le premier arbre à cames. Si cette solution limite légèrement l'encombrement des roues dentées d'arbre à cames en termes de hauteur et de largeur, elle augmente néanmoins de manière significative l'encombrement des arbres à cames en les allongeant.

En tout état de cause, la puissance maximale pouvant être transmise par des chaînes et des courroies crantées est limitée de sorte qu'elles ne peuvent assurer la transmission de couples très élevés, par exemple supérieur à 100Nm, sans risquer de se rompre. Cela est particulièrement contraignant pour le choix des accessoires pouvant être entraînés par le vilebrequin.

Ainsi, aucune de ces solutions n'est totalement satisfaisante.

### PRESENTATION DE L'INVENTION

La présente invention a pour but de pallier les inconvénients précédemment cités en proposant un ensemble pour moteur à combustion interne, notamment de véhicule automobile, comprenant au moins un arbre à cames, un vilebrequin et un organe de transmission comprenant lui-même une chaîne ou une courroie crantée et deux roues dentées intermédiaires solidaires en rotation l'une avec l'autre, une première des roues dentées intermédiaires de l'organe de transmission étant engrenée sur une roue dentée de vilebrequin solidaire en rotation du vilebrequin, tandis que la chaîne ou la courroie crantée est engrenée sur une deuxième des roues dentées intermédiaires d'une part et sur une roue dentée d'arbre à cames montée solidaire en rotation sur l'arbre à cames d'autre part.

Plus précisément, l'invention a pour objet un ensemble pour moteur à combustion interne, notamment de véhicule automobile, comprenant :
- un vilebrequin s'étendant suivant un axe de vilebrequin et conçu pour tourner autour de l'axe de vilebrequin,
- une roue dentée de vilebrequin montée solidaire en rotation sur le vilebrequin autour de l'axe de vilebrequin,
- au moins un arbre à cames s'étendant suivant un axe d'arbre à cames parallèle à l'axe de vilebrequin et conçu pour tourner autour de l'axe d'arbre à cames,
- une roue dentée d'arbre à cames montée solidaire en rotation sur l'arbre à cames autour de l'axe d'arbre à cames,
- un organe de transmission conçu pour transmettre le mouvement de rotation du vilebrequin autour de l'axe de vilebrequin à l'arbre à cames autour de l'axe d'arbre à cames, l'organe de transmission comprenant :
   ∘ une première roue dentée intermédiaire conçue pour tourner autour d'un axe de transmission parallèle à l'axe de vilebrequin, la première roue dentée intermédiaire étant engrenée sur la roue dentée de vilebrequin, de sorte à transmettre le mouvement de rotation du vilebrequin et de la roue dentée de vilebrequin autour de l'axe de vilebrequin à la première roue dentée intermédiaire autour de l'axe de transmission,
   ∘ une deuxième roue dentée intermédiaire montée solidaire en rotation avec la première roue dentée intermédiaire autour de l'axe de transmission,
   ∘ un organe de transmission flexible fermé engrené d'une part sur la deuxième roue dentée intermédiaire et d'autre part sur la ou les roues dentées d'arbre à cames, de sorte à transmettre le mouvement de rotation de la deuxième roue dentée intermédiaire autour de l'axe de transmission à la roue dentée d'arbre à cames et ainsi à l'arbre à cames autour de l'axe d'arbre à came.

Selon différents modes de réalisation de l'invention, qui pourront être pris ensemble ou séparément :
- l'organe de transmission flexible fermé est une chaîne ou une courroie crantée,
- l'ensemble comprend au moins un sous-ensemble d'équilibrage comportant :
   ∘ un arbre d'équilibrage s'étendant suivant un axe d'équilibrage parallèle à l'axe de vilebrequin et conçu pour tourner autour de l'axe d'équilibrage,
   ∘ une roue dentée d'équilibrage montée solidaire en rotation sur l'arbre d'équilibrage autour de l'axe d'équilibrage, la roue dentée d'équilibrage étant engrenée sur la roue dentée de vilebrequin ou sur la première roue dentée intermédiaire.
- le sous-ensemble d'équilibrage comprend une outre un accessoire couplé à l'arbre d'équilibrage,
- l'ensemble comprend au moins un sous-ensemble d'accessoire comportant :
   ∘ un arbre d'accessoire s'étendant suivant un axe d'accessoire, parallèle à l'axe de vilebrequin, et conçu pour tourner autour de l'axe d'accessoire,
   ∘ un accessoire couplé avec l'arbre d'accessoire,
   ∘ une roue dentée d'accessoire montée solidaire en rotation sur l'arbre d'accessoire autour de l'axe d'accessoire, la roue dentée d'accessoire étant engrenée sur la roue dentée de vilebrequin ou sur la première roue dentée intermédiaire.
- la roue dentée de vilebrequin et la première roue dentée intermédiaire présentent le même nombre de dents et le même diamètre,
- la roue dentée de vilebrequin et/ou la première roue dentée intermédiaire présentent un nombre de dents supérieur ou égal à 17 dents,
- l'une parmi la roue dentée de vilebrequin et la première roue dentée intermédiaire comporte une denture réalisée en matériau plastique,
- l'autre parmi la roue dentée de vilebrequin et la première roue dentée intermédiaire comporte une denture réalisée en acier,
- la ou les roues dentées d'équilibrage et/ou d'accessoire, engrenées sur celle parmi la roue dentée de vilebrequin et la première roue dentée intermédiaire comprenant une denture en matériau plastique, comportent une denture réalisée en acier,
- la ou les roues dentées d'équilibrage et/ou d'accessoire, engrenées sur celle parmi la roue dentée de vilebrequin et la première roue dentée intermédiaire comprenant une denture réalisée en acier, comportent une denture réalisée en acier ou en matériau plastique.

L'invention a encore pour objet un moteur à combustion interne, notamment de véhicule automobile, comprenant une culasse et un ensemble tel que précédemment décrit, le vilebrequin, l'arbre à cames et les première et deuxième roues dentées intermédiaires étant montés rotatifs sur la culasse.

### PRESENTATION DES DESSINS

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés dans lesquels :
- la figure 1 est une vue de face d'un moteur à combustion interne comprenant un ensemble selon un mode de réalisation de l'invention,
- la figure 2 est une vue de face d'un ensemble pour moteur à combustion interne selon un autre mode de réalisation de l'invention.

### DESCRIPTION DETAILLEE

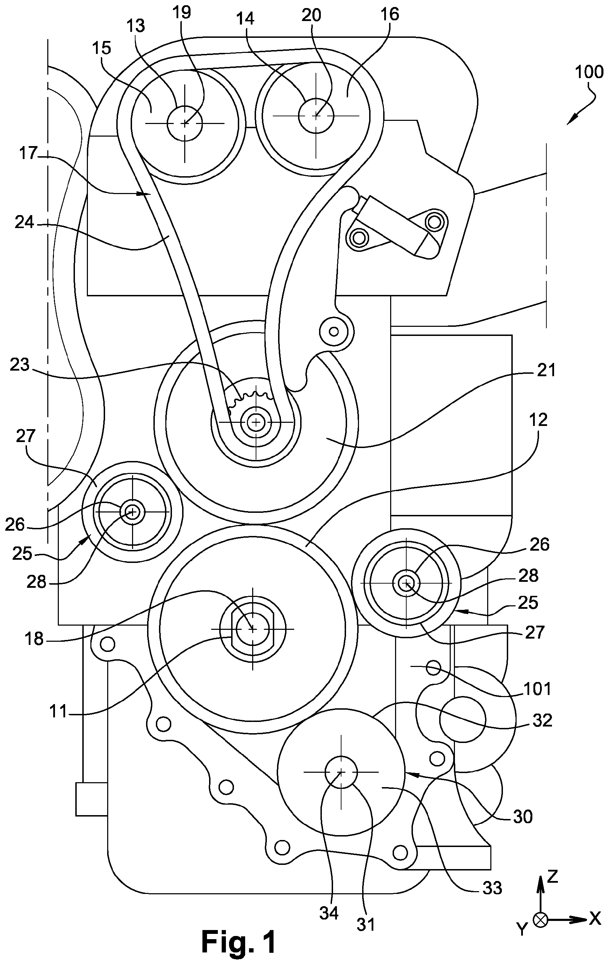

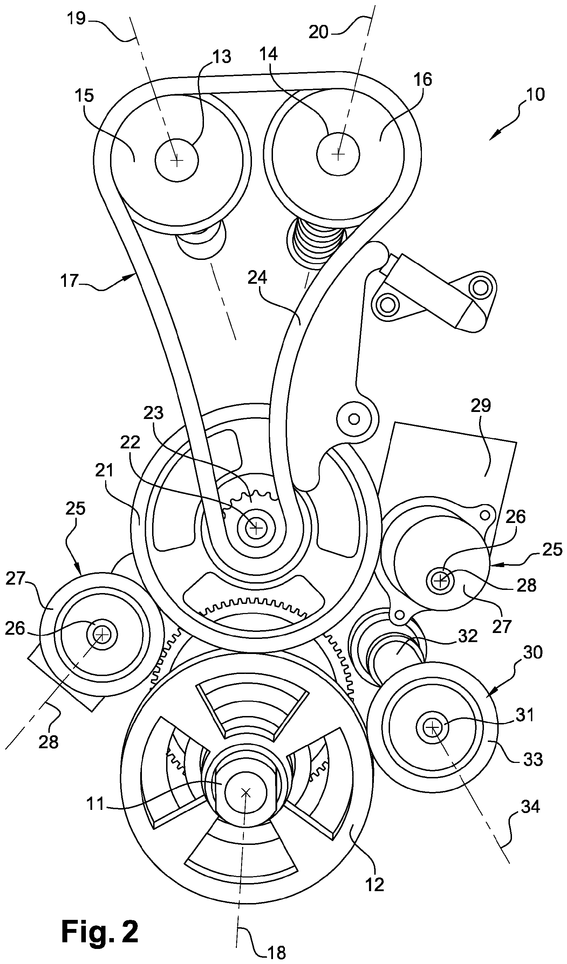

La figure 1 montre un moteur à combustion interne 100 comprenant un ensemble 10 pour moteur à combustion interne 100 selon un exemple de réalisation de l'invention et une culasse 101 sur laquelle l'ensemble 10 est monté. La figure 2 montre un autre exemple d'ensemble 10 pour moteur à combustion interne 100.

On définit un repère orthogonal comprenant une direction longitudinale X, une direction transversale Y et une direction verticale Z, les directions longitudinale X et transversale Y étant horizontales. La direction verticale Z n'est pas définie ici par rapport à la gravité.

Dans tous ces exemples, l'ensemble 10 comprend un vilebrequin 11, une roue dentée 12 de vilebrequin, au moins un arbre à cames 13, 14, au moins une roue dentée 15, 16 d'arbre à cames et un organe de transmission 17.

Le vilebrequin 11 s'étend suivant un axe de vilebrequin 18. L'axe de vilebrequin 18 est horizontal.

Le vilebrequin 11 est en outre conçu pour tourner autour de l'axe de vilebrequin 18. Le vilebrequin 11 est par exemple monté rotatif sur la culasse 101 autour de l'axe de vilebrequin 18.

Le vilebrequin 11 est destiné à être entraîné en rotation par des pistons (non représentés) du moteur à combustion interne 100 montés coulissant à l'intérieur de cylindres (non représentés) logés dans la culasse 101 suivant un axe perpendiculaire à l'axe de vilebrequin 11. Chacun des pistons est relié au vilebrequin 11 par l'intermédiaire d'une bielle (non représentée) assurant la transformation du mouvement alternatif de coulissement du piston en mouvement de rotation du vilebrequin 11 autour de l'axe de vilebrequin 18.

La roue dentée 12 de vilebrequin est montée solidaire en rotation avec le vilebrequin 11 autour de l'axe de vilebrequin 18. Ainsi, lorsque les pistons entraînent en rotation le vilebrequin 11 autour de l'axe de vilebrequin 18, le vilebrequin 11 entraîne lui-même en rotation la roue dentée 12 de vilebrequin autour de l'axe de vilebrequin 18.

L'arbre à cames 13, 14 s'étend suivant un axe d'arbre à cames 19, 20 et est conçu pour tourner autour de l'axe d'arbre à cames 19, 20. L'arbre à cames 13, 14 est par exemple monté rotatif sur la culasse 101 autour de l'axe d'arbre à cames 19, 20.

L'arbre à cames 13, 14 est destiné à commander l'ouverture et la fermeture de soupapes d'admission et d'échappement (non représentées) du moteur à combustion interne 100.

Pour cela, des cames (non représentées) portées par l'arbre à cames 13, 14 sont chacune conçues pour entraîner en translation une soupape d'admission ou d'échappement suivant un axe perpendiculaire à l'axe d'arbre à cames 19, 20 entre une position d'ouverture et une position de fermeture, lorsque l'arbre à cames 13, 14 tournent autour de l'axe d'arbre à cames 19, 20. Les cames permettent ainsi de transformer le mouvement de rotation de l'arbre à cames 13, 14 en un mouvement de translation alternatif des soupapes d'admission et d'échappement.

En position d'ouverture, chacune des soupapes d'admission libèrent un orifice d'admission, autorisant ainsi l'admission des gaz de combustion depuis un conduit d'admission vers l'une des chambres de combustion logées dans les cylindres de la culasse 101, entre le piston et les soupapes d'admission et d'échappement. En position de fermeture, chacune des soupapes d'admission bloque leur orifice d'admission.

En position de fermeture, chacune des soupapes d'échappement bloque un orifice d'échappement. En position d'ouverture, chacune des soupapes d'échappement libère leur orifice d'échappement, autorisant ainsi l'échappement des gaz de combustion depuis la chambre de combustion qui leur est associée vers un conduit d'échappement.

L'arbre à cames 13, 14 est agencé au-dessus des chambres de combustion, tandis que le vilebrequin 11 est agencé en dessous des chambres de combustion.

Une roue dentée 15, 16 d'arbre à cames est montée solidaire en rotation avec l'arbre à cames 13, 14. Ainsi, lorsque la roue dentée 15, 16 d'arbre à cames est entraînée en rotation autour de l'axe d'arbre à cames 19, 20, la roue dentée 15, 16 d'arbre à cames entraîne elle-même en rotation l'arbre à cames 13, 14 autour de l'axe d'arbre à cames 19, 20.

L'organe de transmission 17 est conçu pour transmettre le mouvement de rotation du vilebrequin 11 autour de l'axe de vilebrequin 18 à l'arbre à cames 13, 14 autour de l'axe d'arbre à cames 19, 20, par l'intermédiaire de la roue dentée 12 de vilebrequin et la roue dentée 15, 16 d'arbre à cames.

L'organe de transmission 17 permet de transformer une puissance d'entrée fournie par le vilebrequin 11, à savoir le produit de la vitesse de rotation du vilebrequin 11 et du couple fourni par le vilebrequin 11, en une puissance de sortie reçue par l'arbre à cames 13, 14, à savoir le produit de la vitesse de rotation de l'arbre à cames 13, 14 et du couple qu'il reçoit de l'organe de transmission 17. Ainsi, l'organe de transmission 17 permet, à partir de la vitesse de rotation du vilebrequin 11 et du couple qu'il fournit, de jouer d'une part sur la vitesse de rotation de l'arbre à cames 13, 14 et d'autre part sur le couple reçu par ces derniers.

L'organe de transmission 17 comprend une première roue dentée intermédiaire 21 conçue pour tourner autour d'un axe de transmission 22 parallèle à l'axe de vilebrequin 18.

La première roue dentée intermédiaire 21 est en outre engrenée sur la roue dentée 12 de vilebrequin, de sorte à transmettre le mouvement de rotation du vilebrequin 11 et de la roue dentée 12 de vilebrequin autour de l'axe de vilebrequin 18 à la première roue dentée intermédiaire 21 autour de l'axe de transmission 22. La roue dentée 12 de vilebrequin et la première roue dentée intermédiaire 21 sont ainsi sensiblement coplanaires.

L'organe de transmission 17 comprend encore une deuxième roue dentée intermédiaire 23 montée solidaire en rotation avec la première roue dentée intermédiaire 21 autour de l'axe de transmission 22. Ainsi, lorsque la première roue dentée intermédiaire 21 est entraînée en rotation autour de l'axe de transmission 22 par la roue dentée 12 de vilebrequin, elle entraîne elle-même en rotation la deuxième roue dentée intermédiaire 21 autour de l'axe de transmission 22.

Les première et deuxième roues dentées intermédiaires 21, 23 sont par exemple montées rotatives sur la culasse 101.

Les première et deuxième roues dentées intermédiaires 21, 23 peuvent être d'un seul tenant ou encore monobloc.

La denture de la deuxième roue dentée intermédiaire 23 est ainsi décalée axialement vers l'extérieur du moteur à combustion interne 10 par rapport à la denture de la première roue dentée intermédiaire 21. Par exemple, la première roue dentée intermédiaire 21 est agencée à l'intérieur d'une chambre latérale fermée par un couvercle (non représentés), tandis que la roue dentée 23 est agencée à l'extérieure de ladite chambre.

Les première et deuxième roues dentées intermédiaires 21, 23 peuvent en variante être montées chacune solidaires en rotation sur un arbre intermédiaire commun s'étendant suivant l'axe de transmission 22.

L'organe de transmission 17 comprend encore une chaîne ou une courroie crantée 24 engrenée d'une part sur la deuxième roue dentée intermédiaire 23 et d'autre part sur la roue dentée 15, 16 d'arbre de cames. A cet effet, la roue dentée 15, 16 d'arbre à cames est dans le même plan vertical que la deuxième roue dentée intermédiaire 23. Ainsi, lorsque la deuxième roue dentée intermédiaire 23 est entraînée en rotation autour de l'axe de transmission 22 par la première roue dentée intermédiaire 21, elle entraîne elle-même en rotation la roue dentée 15, 16 d'arbre à cames et donc l'arbre à cames 13, 14 autour de l'axe d'arbre à cames 19, 20 par l'intermédiaire de la chaîne ou de la courroie crantée 24.

De cette manière, la transmission de puissance entre le vilebrequin 11 et l'arbre à cames 13, 14 est réalisée en partie au moyen d'engrenages, entre le vilebrequin 11 et la première roue dentée intermédiaire 21, et en partie au moyen de chaîne ou de courroie crantée 24, entre la deuxième roue dentée intermédiaire 23 montée solidaire en rotation avec la première roue dentée 21 et l'arbre à cames 13, 14.

Cette transmission de puissance du vilebrequin 11 à l'arbre à cames 13, 14 d'une part par engrenages 12, 21 et d'autre part par chaîne ou courroie crantée 24 rend plus adaptable l'agencement de l'arbre à cames 13, 14 par rapport au vilebrequin 11, notamment en termes de distance entre ces derniers. L'ensemble 10 impose donc moins de contraintes en termes d'architecture du moteur à combustion interne 100.

Par ailleurs, il permet de dimensionner la roue dentée 12 de vilebrequin et la première roue dentée intermédiaire 21 d'une part et la deuxième roue dentée intermédiaire 23, la chaîne ou courroie crantée 24 et la roue dentée 15, 16 d'arbre à cames d'autre part de manière indépendante pour ce qui concerne les couples à transmettre/à recevoir. En particulier, le nombre de dents et le diamètre des première et deuxième roues dentées intermédiaires 12, 21 peuvent être définis de manière indépendante. On notera que seule la vitesse de rotation des différentes roues dentées 12, 21, 23, 15, 16 reste contrainte par le rapport de nombre de tours entre le vilebrequin 11 et l'arbre à cames 13, 14. Ce rapport est par exemple de 2:1.

Les première et deuxième roues dentées intermédiaires 21, 23 permettent en outre de réserver la transmission de puissance par chaîne ou courroie crantée 24 à l'arbre à cames 13, 14 qui, pour un même rapport de vitesse de rotation avec le vilebrequin 11, peut pour lui seul ne recevoir que peu de couple de l'organe de transmission 17. L'arbre à cames 13, 14 est donc davantage compatible avec les contraintes en termes de puissance maximale transmissible inhérentes à la transmission de puissance par chaîne ou par courroie crantée 24. Le couple reçu par l'arbre à cames 13, 14 est par exemple inférieur à 50Nm, notamment compris entre 10 et 20Nm.

Ainsi, la puissance et plus précisément le couple à transmettre via la chaîne ou la courroie crantée 24 peuvent être réduits de sorte que la deuxième roue dentée intermédiaire 23, la chaîne ou courroie crantée 24 et la roue dentée 15, 16 d'arbre à cames peuvent être redimensionnés en tenant compte de cette diminution de couple à transmettre. En particulier, le pas de la chaîne ou de la courroie crantée 24 peut être réduit, de même que le nombre de dents et le diamètre de la roue dentée 15, 16 d'arbre à cames. L'encombrement de l'ensemble 10 et donc du moteur à combustion interne 100 s'en trouve diminué de même que leur masse.

L'ensemble 10 peut comprendre deux arbres à cames 13, 14, comme cela est par exemple illustré sur les figures 1 et 2.

Dans ce cas, cette diminution de diamètre des roues dentées 15, 16 d'arbre à cames permet en outre d'engrener la chaîne ou la courroie crantée 24 directement sur les roues dentées 15, 16 de chacun de ces deux arbres à cames 13, 14, notamment lorsque les arbres à cames 13, 14 sont proches l'un de l'autre, sans que la chaîne ou la courroie crantée 24 ait à entraîner en rotation un premier des deux arbres à cames entraînant lui-même le deuxième des deux arbres à cames par engrenages. Les deux roues dentées 15, 16 d'arbre à cames sont ainsi directement entraînées en rotation par une chaîne ou une courroie crantée 24 commune.

L'axe de transmission 22 est par exemple interposé entre l'axe de vilebrequin 18 et l'axe d'arbre à cames 19, 20 suivant la direction verticale Z. Lorsque l'ensemble 10 comprend deux arbres à cames 13, 14, leurs axes d'arbre à cames 19, 20 sont agencés à la même hauteur.

L'ensemble 10 peut en outre comprendre au moins un sous-ensemble d'équilibrage 25 comportant lui-même un arbre d'équilibrage 26 et une roue dentée 27 d'équilibrage.

L'arbre d'équilibrage 26 s'étend suivant un axe d'équilibrage 28, parallèle à l'axe de vilebrequin 18, et est conçu pour tourner autour de l'axe d'équilibrage 28. L'arbre d'équilibrage 26 est par exemple monté rotatif sur la culasse 101.

On entend par « arbre d'équilibrage » un arbre 26 tournant disposé parallèlement au vilebrequin 11 et comportant des contrepoids destinés à réduire les vibrations du moteur à combustion interne 100 dues au mouvement des pistons et des bielles. L'arbre d'équilibrage 26 permet de réaliser un équilibrage dynamique du moteur à combustion interne 100.

La roue dentée 27 d'équilibrage est montée solidaire en rotation sur l'arbre d'équilibrage 26 autour de l'axe d'équilibrage 28.

La roue dentée 27 d'équilibrage est engrenée sur la roue dentée de vilebrequin 12 ou sur la première roue dentée intermédiaire 21.

L'arbre d'équilibrage 26 d'au moins un sous-ensemble d'équilibrage 25 peut aussi être couplé à un premier accessoire 29, tel qu'une pompe à injection, notamment une pompe à injection haute pression, une pompe à eau, une pompe à huile, un compresseur de climatisation, un moteur électrique utilisable en mode démarreur/alternateur/boost ou encore un alternateur.

Ainsi, lorsque l'arbre d'équilibrage 26 tourne autour de l'axe d'équilibrage 28, il transmet un couple au premier accessoire 29.

L'ensemble 10 peut aussi comprendre au moins un sous-ensemble d'accessoire 30 comportant lui-même un arbre d'accessoire 31, un deuxième accessoire 32 et une roue dentée 33 d'accessoire.

L'arbre d'accessoire 31 s'étend suivant un axe d'accessoire 34, parallèle à l'axe de vilebrequin 18, et est conçu pour tourner autour de l'axe d'accessoire 34. L'arbre d'accessoire 31 est par exemple monté rotatif sur la culasse 101.

Le deuxième accessoire 32 est couplé à l'arbre d'accessoire 31. Ainsi, lorsque l'arbre d'accessoire 31 tourne autour de l'axe d'accessoire 34, il transmet un couple au deuxième accessoire 32.

Le deuxième accessoire 32 est choisi parmi une pompe à injection, notamment une pompe à injection haute pression, une pompe à eau, une pompe à huile, un compresseur de climatisation, un moteur électrique utilisable en mode démarreur/alternateur/boost ou encore un alternateur.

La roue dentée 33 d'accessoire est montée solidaire en rotation sur l'arbre d'accessoire 30 autour de l'axe d'accessoire 34.

La roue dentée 33 d'accessoire est engrenée sur la roue dentée de vilebrequin 12 ou sur la première roue dentée intermédiaire 21.

De cette manière, la transmission de puissance par engrenages 12, 21 est réservée au ou aux sous-ensembles d'équilibrage 25 et/ou d'accessoire 30 qui nécessitent de recevoir un couple élevé voire très élevé de l'organe de transmission 17. Le couple reçu par le ou les sous-ensembles d'équilibrage 25 et/ou d'accessoire 30 est par exemple supérieur ou égal à 20Nm. Ce couple peut encore être supérieur ou égal à 50Nm, voire à 100Nm.

L'organe de transmission 17 permet donc de mettre en parallèle la transmission de puissance de l'arbre à cames 13, 14 qui est peu demandeur en couple et la transmission de puissance du ou des sous-ensembles d'équilibrage 25 et/ou d'accessoire 30 qui sont plus demandeurs en couple, par le biais des premier et deuxième roues dentées intermédiaires 21, 23, et ainsi de tirer profit à la fois de la transmission de puissance par engrenages 12, 21 et par chaîne ou courroie crantée 24.

Par ailleurs, même pour des sous-ensembles d'équilibrage 25 et/ou d'accessoire 30 qui seraient peu demandeurs en couple par rapport à l'arbre d'équilibrage 13, 14, leur entraînement en rotation par engrenages permet en tout état de cause de décharger la chaîne ou la courroie crantée 24 qui peut ainsi être avantageusement redimensionnée comme cela a été expliqué plus haut.

On notera en outre que le vilebrequin 11, les première et deuxième roues intermédiaires 21, 23 et les sous-ensembles d'équilibrage 26 et d'accessoire 30 sont nécessairement regroupés, tandis que l'arbre à cames 13, 14 peut être décalé, plus ou moins loin, par rapport à ce regroupement. L'agencement entre le vilebrequin 11 et l'arbre à cames 13, 14 est ainsi particulièrement adaptable.

La roue dentée de vilebrequin 12 et la première roue dentée intermédiaire 21 présentent par exemple le même nombre de dents et le même diamètre.

Ainsi, lorsque la roue dentée 12 de vilebrequin tourne autour de l'axe de vilebrequin 18 et entraîne en rotation la première roue dentée intermédiaire 21 autour de l'axe de transmission 22, la roue dentée 12 de vilebrequin et la première roue dentée intermédiaire 21 tournent à la même vitesse de rotation. Par ailleurs, la première roue dentée intermédiaire 21 peut, aux pertes près, transmettre le même couple que la roue dentée 12 de vilebrequin à d'autres composants de l'ensemble 10.

De cette manière, le ou les sous-ensembles d'équilibrage 26 et/ou d'accessoire 30 peuvent aussi bien être entraînés en rotation par l'une ou l'autre des roue dentée 12 de vilebrequin et première roue dentée intermédiaire 21 sans que cela n'influe sur le couple ou la vitesse de rotation qui leur sont transmis. L'agencement du ou des sous-ensembles d'équilibrage 26 et/ou d'accessoire 30 par rapport au vilebrequin 11 est donc plus adaptable. L'ensemble 10 impose ainsi moins de contraintes en termes d'architecture du moteur à combustion interne 100.

La roue dentée de vilebrequin 12 et la première roue dentée intermédiaire 21 peuvent en variante présenter un nombre de dents différent.

La roue dentée 12 de vilebrequin et la première roue dentée intermédiaire 21 présentent par exemple un nombre de dents supérieur ou égal à 17 dents.

La roue dentée 12 de vilebrequin et la première roue dentée intermédiaire 21 présentent ainsi un grand diamètre de sorte que, pour un même couple transmis au ou aux sous-ensembles d'équilibrage 25 et/ou d'accessoire 30, l'effort appliqué par les dents de l'une ou l'autre de ces roues dentées 12, 21 aux dents de la ou des roues dentées 27, 33 d'équilibrage et/ou d'accessoire est réduit.

La deuxième roue dentée intermédiaire 23 présente par exemple un nombre de dents et un diamètre inférieurs à ceux de la première roue dentée intermédiaire 21.

La deuxième roue dentée intermédiaire 23 présente par exemple un nombre de dents supérieur ou égal à 17 dents.

Lorsque l'ensemble 10 comprend deux arbres à cames 13, 14, les roues dentées 15, 16 d'arbre à cames présentent par exemple le même nombre de dents et le même diamètre, de sorte que les arbres à cames 13, 14 tournent à la même vitesse de rotation.

Les roues dentées 15, 16 d'arbre à cames présente par exemple un nombre de dents supérieur ou égal à 17 dents.

L'une parmi la roue dentée de vilebrequin 12 et la première roue dentée intermédiaire 21 comporte une denture réalisée en matériau plastique.

La denture de la roue dentée de vilebrequin 12 ou de la première roue dentée intermédiaire 21 est par exemple réalisée à partir d'une matière plastique renforcée de fibres.

On entend par « matière plastique renforcée de fibres » un matériau composite comprenant une matrice polymère renforcée par exemple par des fibres synthétiques.

Le matériau plastique permet d'opérer un amortissement entre les dents de la roue dentée 12, 21 en matériau plastique et les dents de l'autre roue dentée 21, 12, lors de leur engrènement. Ainsi, il n'est pas nécessaire d'opter pour des engrenages à rattrapage de jeu. Cela permet un gain de coût.

Par ailleurs, le matériau plastique permet de réduire la masse de la roue dentée 12, 21 et ainsi celle de l'ensemble 10 et plus généralement celle du moteur à combustion interne 100.

L'autre parmi la roue dentée de vilebrequin 12 et la première roue dentée intermédiaire 21 comporte par exemple une denture réalisée en acier. La denture peut encore être réalisée en un matériau présentant des propriétés mécaniques, telles qu'une résistance mécanique et une dureté, équivalentes à l'acier.

Cela permet d'éviter la rupture mécanique des dents en matériau plastique de l'un des roues dentées 12, 21 lors de leur engrènement avec les dents en acier de l'autre des roues dentées 21, 12, le couple transmis de la roue dentée 12 de vilebrequin à la première roue dentée intermédiaire 21 pouvant être élevé.

La ou les roues dentées 27, 33 d'équilibrage et/ou d'accessoire, engrenées sur celle parmi la roue dentée de vilebrequin 12 et la première roue dentée intermédiaire 21 comprenant une denture en matériau plastique, comportent une denture réalisées en acier.

Cela permet d'éviter la rupture mécanique des dents en matériau plastique de la roue dentée 12, 21 en cas de couple élevé à transmettre au ou aux sous-ensembles 25, 30 d'équilibrage et/ou d'accessoire.

La ou les roues dentées 27, 33 d'équilibrage et/ou d'accessoire, engrenées sur celle parmi la roue dentée de vilebrequin 12 et la première roue dentée intermédiaire 21 comprenant une denture réalisée en acier, comporte une denture en d'acier ou en matériau plastique, notamment à partir d'une matière plastique renforcée de fibres.

De cette manière, le matériau de la denture de la ou des roues dentées 27, 33 d'équilibrage et/ou d'accessoire peut être choisi en fonction du couple transmis par la roue dentée 12, 21 dont la denture est réalisée en acier.

Ainsi, si la ou les roues dentées 27, 33 d'équilibrage et/ou d'accessoire nécessitent de recevoir un couple élevé, par exemple parce qu'elles sont montées solidaires en rotation sur un arbre d'équilibrage 26 couplé à un premier accessoire 29 ou sur un arbre d'accessoire 31, la denture de ladite ou desdites roues dentées 27, 33 sera plutôt réalisée à partir d'acier afin de privilégier un contact acier/acier. C'est par exemple le cas, lorsque le couple reçu par la roue dentée 27, 33 d'équilibrage ou d'accessoire est supérieur ou égal à 50Nm.

Au contraire, si la ou les roues dentées 27, 33 d'équilibrage et/ou d'accessoire nécessitent de recevoir un couple plus faible, la denture de ladite ou lesdites roues dentées 27, 33 pourra aussi bien être réalisées en matériau plastique ou en acier. C'est par exemple le cas des roues dentées 27 d'équilibrage montées solidaire en rotation d'arbre d'équilibrage 26 non couplé à un accessoire.

La roue dentée de vilebrequin 12, la ou les roues dentées 15, 16 d'arbre à cames, la première roue dentée intermédiaire 21, la deuxième roue dentée intermédiaire 23 et la ou les roues dentées 27, 33 d'équilibrage et/ou d'accessoire peuvent par exemple présenter une denture droite ou hélicoïdale. Les dentures hélicoïdales présentent l'avantage d'être capables de transmettre plus de couple.

L'ensemble 10 peut par exemple être monté sur la culasse 101 d'un moteur à combustion interne 100 de véhicule automobile, tel qu'une voiture automobile ou encore une motocyclette, mais aussi de bateau ou encore de générateur. Ces exemples ne sont pas limitatifs.

Le moteur à combustion interne 100 peut être un moteur Diesel, un moteur à essence, un moteur à gaz ou encore un moteur à hydrogène. Ces exemples ne sont pas limitatifs.

## Revendications

1. Ensemble (10) pour moteur à combustion interne (100), notamment de véhicule automobile, comprenant :
- un vilebrequin (11) s'étendant suivant un axe de vilebrequin (18) et conçu pour tourner autour de l'axe de vilebrequin (18),
- une roue dentée (12) de vilebrequin montée solidaire en rotation sur le vilebrequin (11) autour de l'axe de vilebrequin (18),
- au moins un arbre à cames (13, 14) s'étendant suivant un axe d'arbre à cames (19, 20) parallèle à l'axe de vilebrequin (18) et conçu pour tourner autour de l'axe d'arbre à cames (19, 20),
- une roue dentée (15, 16) d'arbre à cames montée solidaire en rotation sur l'arbre à cames (13, 14) autour de l'axe d'arbre à cames (19, 20),
- un organe de transmission (17) coopérant d'une part avec la roue dentée (12) de vilebrequin et d'autre part avec la roue dentée (15, 16) d'arbre à cames, l'organe de transmission (17) étant conçu pour transmettre le mouvement de rotation du vilebrequin (11) autour de l'axe de vilebrequin (18) à l'arbre à cames (13, 14) autour de l'axe d'arbre à cames (19, 20), l'organe de transmission (17) comprenant :
- une première roue dentée intermédiaire (21) conçue pour tourner autour d'un axe de transmission (22) parallèle à l'axe de vilebrequin (18),
la première roue dentée intermédiaire (21) étant engrenée sur la roue dentée (12) de vilebrequin, de sorte à transmettre le mouvement de rotation du vilebrequin (11) et de la roue dentée (12) de vilebrequin autour de l'axe de vilebrequin (18) à la première roue dentée intermédiaire (21) autour de l'axe de transmission (22),
- une deuxième roue dentée intermédiaire (23) montée solidaire en rotation avec la première roue dentée intermédiaire (21) autour de l'axe de transmission (22),
- un organe de transmission flexible fermé (24) engrené d'une part sur la deuxième roue dentée intermédiaire (23) et d'autre part sur la roue dentée (15, 16) d'arbre à cames, de sorte à transmettre le mouvement de rotation de la deuxième roue dentée intermédiaire (23) autour de l'axe de transmission (22) à la roue dentée d'arbre à cames (15, 16) et ainsi à l'arbre à cames (13, 14) autour de l'axe d'arbre à cames (19, 20),
**caractérisé en ce que** la roue dentée (12) de vilebrequin et la première roue dentée intermédiaire (21) présentent le même nombre de dents et le même diamètre.

2. Ensemble (10) selon la revendication 1, dans lequel la roue dentée (12) de vilebrequin et/ou la première roue dentée intermédiaire (21) présentent un nombre de dents supérieur ou égal à 17 dents.

3. Ensemble (10) selon l'une des revendications 1 à 2, dans lequel l'une parmi la roue dentée (12) de vilebrequin et la première roue dentée intermédiaire (21) comporte une denture réalisée en matériau plastique.

4. Ensemble (10) selon la revendication 3, dans lequel l'autre parmi la roue dentée (12) de vilebrequin et la première roue dentée intermédiaire (21) comporte une denture réalisée en acier.

5. Ensemble (10) selon l'une des revendications 1 à 4, comprenant au moins un sous-ensemble d'équilibrage (25) comportant :
- un arbre d'équilibrage (26) s'étendant suivant un axe d'équilibrage (28) parallèle à l'axe de vilebrequin (18) et conçu pour tourner autour de l'axe d'équilibrage (28),
- une roue dentée (27) d'équilibrage montée solidaire en rotation sur l'arbre d'équilibrage (26) autour de l'axe d'équilibrage (28), la roue dentée (27) d'équilibrage étant engrenée sur la roue dentée (12) de vilebrequin ou sur la première roue dentée intermédiaire (21).

6. Ensemble (10) selon l'une des revendications 1 à 5, comprenant au moins un sous-ensemble d'accessoire (30) comportant :
- un arbre d'accessoire (31) s'étendant suivant un axe d'accessoire (33), parallèle à l'axe de vilebrequin (18), et conçu pour tourner autour de l'axe d'accessoire (34),
- un accessoire (32) couplé avec l'arbre d'accessoire (31),
- une roue dentée (33) d'accessoire montée solidaire en rotation sur l'arbre d'accessoire (31) autour de l'axe d'accessoire (34), la roue dentée (33) d'accessoire étant engrenée sur la roue dentée (12) de vilebrequin ou sur la première roue dentée intermédiaire (21).

7. Ensemble (10) selon l'une des revendications 3 ou 4 combinée à l'une des revendications 5 ou 6, dans lequel la ou les roues dentées (27, 33) d'équilibrage et/ou d'accessoire, engrenées sur celle parmi la roue dentée (12) de vilebrequin et la première roue dentée intermédiaire (21) comprenant une denture en matériau plastique, comportent une denture réalisée en acier.

8. Ensemble (10) selon l'une des revendications 3 ou 4 combinée à l'une des revendications 6 ou 7 ou selon la revendication 8, dans lequel la ou les roues dentées (27, 33) d'équilibrage et/ou d'accessoire, engrenées sur celle parmi la roue dentée (12) de vilebrequin et la première roue dentée intermédiaire (21) comprenant une denture réalisée en acier, comportent une denture réalisée en acier ou en matière plastique.

9. Moteur à combustion interne (100), notamment de véhicule automobile, comprenant une culasse (101) et un ensemble (10) selon l'une des revendications 1 à 8, le vilebrequin (11), l'arbre à cames (13, 14) et les première et deuxième roues dentées intermédiaires (21, 23) étant montés rotatifs sur la culasse (101).
